Europäisches Patentamt

European Patent Office

Office européen des brevets

(11) Veröffentlichungsnummer: **0 187 203**
**A2**

# EUROPÄISCHE PATENTANMELDUNG

(21) Anmeldenummer: **85112344.8**

(22) Anmeldetag: **28.09.85**

(51) Int. Cl.⁴: **H 02 G 15/08**
**H 01 R 9/05, H 01 R 4/72**

(30) Priorität: **21.12.84 DE 3446728**

(43) Veröffentlichungstag der Anmeldung:
**16.07.86 Patentblatt 86/29**

(84) Benannte Vertragsstaaten:
**AT CH DE GB LI NL**

(71) Anmelder: **ANT Nachrichtentechnik GmbH**
**Gerberstrasse 33**
**D-7150 Backnang(DE)**

(72) Erfinder: **Dyck, Claus, Ing. grad.**
**Im Heidewinkel 17**
**D-7150 Backnang(DE)**

(72) Erfinder: **Preissler, Paul, Dipl.-Ing.**
**Scheffelstrasse 16/2**
**D-7150 Backnang(DE)**

(74) Vertreter: **Wiechmann, Manfred, Dipl.-Ing.**
**ANT Nachrichtentechnik GmbH Gerberstrasse 33**
**D-7150 Backnang(DE)**

(54) **Kabelverteiler bzw. -abzweiger für Breitbandkommunikationskoaxialkabel.**

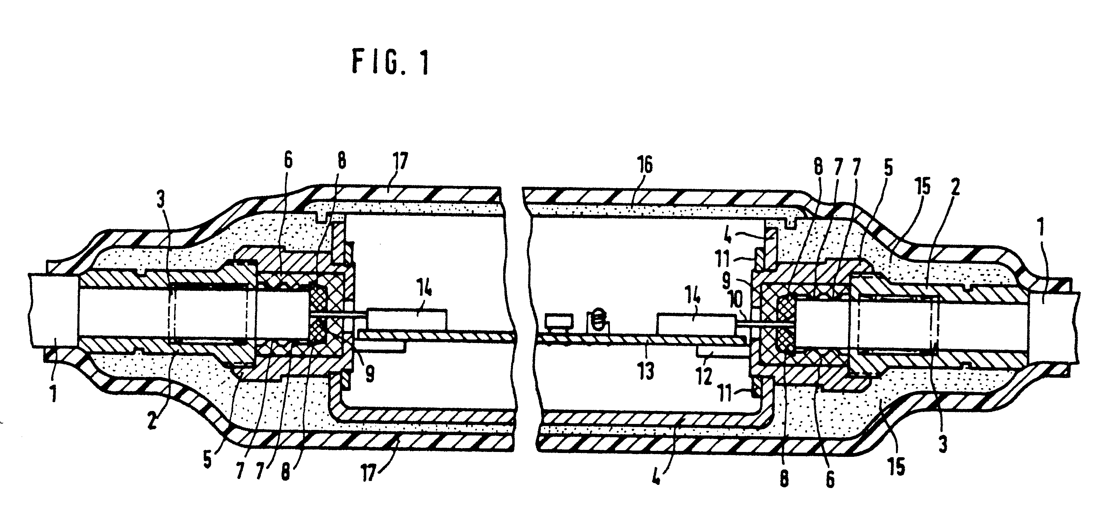

(57) Bei einem Kabelverteiler bzw. -abzweiger für Breitbandkommunikationskoaxialkabel, dessen abgesetzte Koaxialkabelenden durch Klemmhülsen und Aufnahmevorrichtungen (2, 14) kontaktierbar sind, ist ein Metallwinkel (4) vorgesehen, der sowohl zur Kontaktgabe zwischen Klemmhülsen (2) und Leiterplatte (13) als auch zur gegenseitigen Fixierung dient. Die Leiterplatte (2), sowie zumindest ein Teil der Klemmhülsen (2) ist zum Schutz gegen eindringende Feuchtigkeit mit einer Kunststoffumhüllung (15, 16, 20) umgeben. Außerdem sind Maßnahmen zur HF-Abschirmung vorgesehen (Figur 1).

FIG. 1

## Kabelverteiler bzw. -abzweiger für Breitband-
## kommunikationskoaxialkabel

Die Erfindung betrifft einen Kabelverteiler bzw. -abzweiger
gemäß dem Oberbegriff des Patentanspruchs 1. Ein solcher
Verteiler bzw. Abzweiger ist bekannt aus DE 33 01 362 A1.

Zur gegenseitigen Fixierung von Klemmhülsen und Leiterplatte
sowie zur Kontaktgabe ist dort ein relativ aufwendiges und
teueres Metallgehäuse vorgesehen, welches gleichzeitig die
Abschirmung gegen elektromagnetische Einstrahlung oder Abstrahlung übernimmt.

Aufgabe der Erfindung ist es, den Kabelverteiler bzw. -abzweiger gemäß dem Oberbegriff des Patentanspruchs 1 derart
auszubilden, daß eine kostengünstige einfache Herstellung,
insbesondere eine Massenfertigung, unter Gewährleistung einer
ausreichenden mechanischen Stabilität, HF- und Feuchtigkeitsdichtigkeit möglich ist, wobei die Kontaktgabe zwischen
Leiterplatte und Koaxialkabel durch einfaches Einschieben der
abisolierten Koaxialkabelenden möglich sein soll. Diese Aufgabe wird durch die kennzeichnenden Merkmale des Patentanspruchs 1 gelöst. Die Unteransprüche zeigen vorteilhafte Ausgestaltungen der Erfindung auf.

Aus DE G 83 30 675.7 U1 ist es zwar bekannt, einen Kabelverteiler aus einem Kunststoffgehäuse aufzubauen, in welches
zur Abschirmung elektrisch leitende Teilchen eingebettet
sind, jedoch gibt diese Veröffentlichung keine Anregung, wie
eine einfache kostengünstige Fixierung zwischen Klemmhülsen
und Leiterplatte zu erreichen ist.
Die Erfindung eignet sich besonders zur einfachen Montage.
Schraubanschlüsse, die einen hohen Montageaufwand bedingen,
zur Befestigung und Kontaktierung der Koaxialleiter, sind
nicht nötig. Bei der Ausgestaltung nach Patentanspruch 3
dient die Metallhülle nur der Abschirmung und als Schutz vor Eindringen von Kunststoffmasse beim Umspritzen. Es müssen
also keine Mittel zur Kontaktgabe zwischen den Klemmhülsen
und der Leiterplatte vorgesehen sein. Durch die Einlagerung
von Metallpartikeln oder Kohlenstoffpartikel gemäß einer Ausgestaltung nach Anspruch 4 oder 5 läßt sich ein solches Gehäuse einsparen, da diese Partikel dann die Abschirmung übernehmen. Um die Kunststoffumhüllung und um die über die Klemmhülsen nach außen ragenden Koaxialkabelenden läßt sich am
Montageort gemäß einer Ausgestaltung nach Patentanspruch 6
einfach ein Schrumpfschlauch aufschrumpfen, der sowohl die
Zugabfangung der Koaxialkabel übernimmt als auch ein feuchtigkeitsdichtes Verschließen des Abzweigers bzw. Verteilers ermöglicht. Besteht die Kunststoffumhüllung gemäß einer Ausgestaltung nach Patentanspruch 7 selbst aus schrumpfbarem
Material, so läßt sich eine zusätzliche Umhüllung einsparen.
Die Kunststoffumhüllung kann aber auch gemäß einer Ausgestaltung nach Patentanspruch 8 nur im Bereich der Klemmhülsen
schrumpfbar sein oder gemäß einer Ausgestaltung nach Patentanspruch 9 im Bereich der Klemmhülsen mit Schrumpfschlauchstücken versehen sein. Dies ermöglicht die Auslieferung des
Verteilers bzw. Abzweigers als komplett zusammengefügte Einheit und am Montageort müssen lediglich die abgesetzten
Koaxialkabelenden in die Klemmhülsen eingeschoben werden und
der Übergangsbereich zwischen Koaxialkabelaußenmantel und
Klemmhülse überschrumpft werden. Ein Nachabgleich des Verteilers bzw. Abzweigers braucht nicht zu erfolgen. Zum Schutz
der Leiterplatte kann gemäß einer Ausgestaltung nach Patentanspruch 10 die Leiterplatte vor Umspritzen mit der Kunststoffumhüllung von einer Schutzschicht, beispielsweise Gießharz,
umgeben werden. Allerdings muß hierbei darauf geachtet werden,
daß beim Aufbringen der Schutzschicht Aussparungen zum Einführen des Koaxialkabelinnenleiters in die zugehörigen Aufnahmevorrichtungen freibleiben müssen.
Anhand der Zeichnungen wird die Erfindung nun näher erläutert.
Es zeigen Figur 1 einen Längsschnitt durch einen Kabelverteiler bzw. -abzweiger,
Figur 2 einen Kabelverteiler bzw. -abzweiger in einer Draufsicht,

Figur 3 einen Querschnitt durch den Kabelverteiler bzw.
-abzweiger gemäß der Figuren 1 und 2,

Figur 4 einen Kabelverteiler bzw. -abzweiger mit Schutzschicht zwischen Leiterplatte und Kunststoffumhüllung,

Figur 5 einen modifizierten Verteiler bzw. -abzweiger im
Querschnitt,

Figur 6 den Verteiler bzw. -abzweiger gemäß Figur 5 in einer
Draufsicht und

Figur 7 einen Verteiler bzw. -abzweiger mit wärmeschrumpfbarer Kunststoffumhüllung.

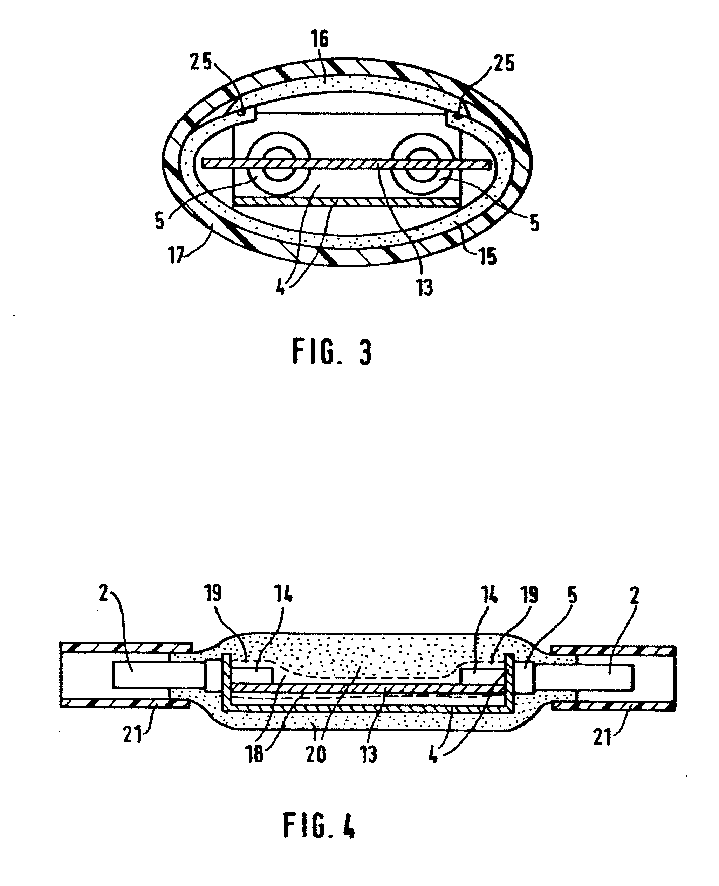

Beim Abzweiger bzw. Verteiler gemäß Figur 1 sind die abgesetzten Enden der Breitbandkommunikationskabel 1 im eingeschobenen Zustand dargestellt. Die Klemmhülse 2 dient zur
Aufnahme des abgemantelten Koaxialkabelaußenleiters. Ein
Kontaktkäfig 3 stellt den elektrischen Kontakt zwischen dem
abgemantelten Koaxialkabelaußenleiter und dem zweischenkligen
U-förmigen Metallwinkel 4 her, und zwar über die Klemmhülse 2
und eine an den Metallwinkel 4 angeschraubte Buchse 5. Für
die Längswasserdichtigkeit ist in die Buchse 5 eine
Dichtung 6 eingelegt, deren Lamellen 7 gegen den Koaxialkabelaußenleiter drücken. In dieser Dichtung 6 befindet sich
eine Zentrierscheibe 8, die einen Trichter und eine
Bohrung 9 aufweist zum Durchstecken des Koaxialkabelinnenleiters 10. Die genaue Anordnung der Längswasserdichtungsmaßnahmen sowie deren Funktion sind der Patentanmeldung
P 33 14 865.1 zu entnehmen. Die Buchse 5 und damit auch die
Klemmhülse 2 ist über eine Ringmutter 11 gegen den Metallwinkel 4 fixierbar. Klemmhülse 2 und Buchse 5 können natürlich auch einstückig aufgebaut sein. An der Buchse 5 befindet sich eine Befestigungsvorrichtung 12 zur Befestigung
der Leiterplatte 13. Über diese Befestigungsvorrichtung 12
kann auch die Kontaktgabe vom Außenleiter des Koaxialkabelaußenleiters zur Leiterplatte 13 erfolgen. Zur Kontaktgabe
zwischen dem Koaxialkabelinnenleiter 10 und der Leiterplatte 13 ist eine Aufnahmevorrichtung 14 vorgesehen. Diese
Aufnahmevorrichtung 14 kann beispielsweise eine Federklemmtulpe sein. Die Kontaktgabe kann so durch einfaches Einschieben des entsprechend abgesetzten Koaxialkabelendes erfolgen. Wie die Figur 1 weiter zeigt, ist die Leiterplatte 13
mitsamt den Befestigungsmitteln und der Klemmhülse 2 bzw.
Buchse 5 von einer Kunststoffumhüllung umgeben. Im Ausführungsbeispiel gemäß Figur 1 besteht diese Kunststoffumhüllung aus einem im wesentlichen wannenartigen Teil 15 mit
Deckel 16. Das wannenartige Teil 15 ist aus Kunststoff gespritzt und schließt an die Schenkel des Metallwinkels 4 an
und umschließt die Buchse 5 und Klemmhülse 2 bis zu deren Ende.
Der Deckel 16 ermöglicht das Einbringen der bestückten Leiterplatte 13 sowie Befestigung an der Befestigungsvorrichtung 12.
Wie der Querschnitt gemäß Figur 3 zeigt, befindet sich zwischen
dem wannenartigen Teil 15 und dem Deckel 16 eine Hochfrequenzdichtung 25. In die Kunststoffumhüllung 15, 16 sind Metallpartikel oder kohlenstoffhaltige Partikel zur HF-Abschirmung
eingelagert. Während Metallpartikel elektromagnetische
Strahlung nur umlenken, d.h. im Kabelverteiler halten, eignen
sich Kohlenstoffpartikel dazu, elektromagnetische Strahlung
zu vernichten, d.h. in Verlustwärme umzusetzen. Die Einlagerung
von Kohlenstoffpartikeln ist deshalb in manchen Fällen vorteilhafter, zumal durch sie keine elektrisch leitfähige Verbindung
zustande kommen kann, die das Hochfrequenz-Verhalten des Abzweigers ungünstig beeinflussen kann.
Anstelle dieser Partikeleinlagerung kann die Leiterplatte 13
mitsamt dem Einführungsbereich des Koaxialkabelinnenleiters 10
von einer Metallhülle umgeben sein. Da diese nur der Abschirmung und einem eventuellen Eindringen von Kunststoffmasse beim Umspritzen dient, kann sie sehr leicht aufgebaut
sein. Gegebenenfalls kann diese Metallhülle aus einer freitragenden Metallfolie bestehen, der an den Innenseiten des gespritzten wannenartigen Teils 15 und des Deckels 16 angebracht
ist. Auf die Kunststoffumhüllung ist ein unter Wärmeeinwirkung
schrumpfbarer Schrumpfschlauch 17 aufgeschrumpft.

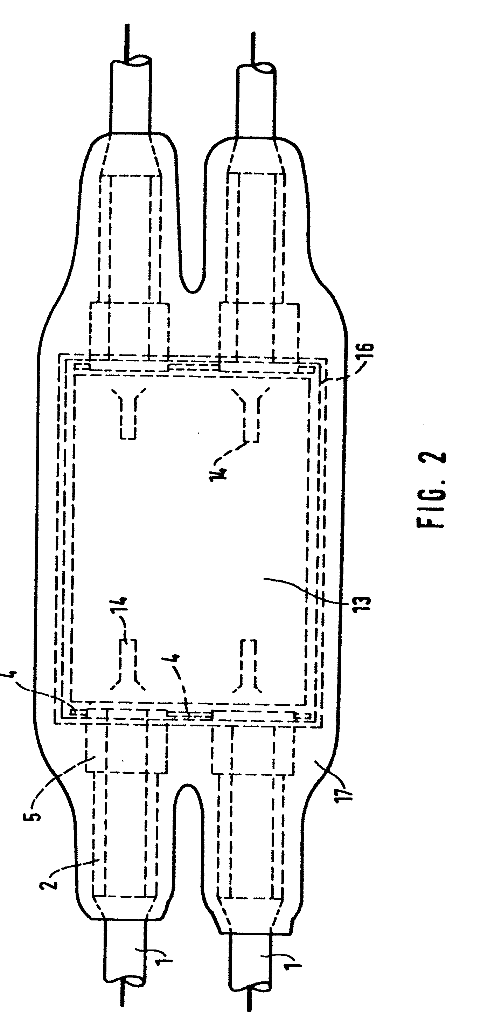

Dieser Schrumpfschlauch 17 umgreift auch die Isolationshülle des Koaxialkabels 1 und dient so als Zugabfangung des
Koaxialkabels im Einbauzustand.
Lieferseitig kann der Verteiler vollständig abgeglichen und
mit der Kunststoffumhüllung versehen sein. Am Montageort
sind dann nur noch die abgesetzten Koaxialkabelenden einzustecken und der Schrumpfschlauch 17 aufzubringen. Der Verteiler bzw. Abzweiger nimmt, wie insbesondere die Figur 2
zeigt, vier Koaxialkabelenden auf. Eine Erweiterung dieses
Ausführungsbeispiels auf mehr als vier Kabelaufnahmen ist
leicht möglich.

Die nachfolgend beschriebenen Ausführungsbeispiele können
prinzipiell die gleiche Kontaktierung über Klemmhülse und
gegebenenfalls Buchse aufweisen wie die bis jetzt vorgestellten Varianten. Deshalb werden die Kabelaufnahmevorrichtungen und Kontaktierungsmittel nachfolgend nicht mehr
detailliert dargestellt.

Beim Ausführungsbeispiel gemäß Figur 4 wird die fertig abgeglichene Leiterplatte 13 mit einer Schutzschicht 18 umgeben.
Im Bereich der Aufnahmevorrichtungen 14 für die Koaxialkabelinnenleiter 10 sind jedoch Aussparungen 19 in dieser Schutzschicht vorgesehen, damit der Koaxialkabelinnenleiter 10 in
die Aufnahmevorrichtung 14 zur Kontaktgabe weiterhin einsteckbar ist. Die Schutzschicht 18 kann am einfachsten dadurch
hergestellt werden, daß die montierte Leiterplatte mit Metallwinkel und Klemmhülsen in Gießharz getaucht wird. Um diese
Schutzschicht 18 sowie um den dem Metallwinkel 4 benachbarten
Teil der Klemmhülsen 2 wird dann die Kunststoffumhüllung 20
aufgespritzt. Beim Ausführungsbeispiel gemäß Figur 4 besteht
diese Kunststoffumhüllung 20 aus nicht schrumpfbarem Material.
Um eine feuchtigkeitsdichte und zugfeste Verbindung zwischen
Abzweiger und den eingeschobenen Koaxialkabelenden dennoch
herzustellen, sind die mit der Kunststoffumhüllung 20 umspritzten Klemmhülsen 2 mit unter Wärmeeinwirkung schrumpfbaren Schrumpfschlauchstücken 21 versehen. Der Montageaufwand am Einsatzort beschränkt sich dann lediglich darauf, die abgesetzten Koaxialkabelenden in die Klemmhülse bzw. Aufnahmevorrichtungen einzustecken und die Schrumpfschlauchstücke 21 auf die Kunststoffummantelung der Koaxialkabelenden aufzuschrumpfen. Zur HF-Abschirmung sind in die Kunststoffumhüllung Metall- oder kohlenstoffhaltige Partikel eingelagert.

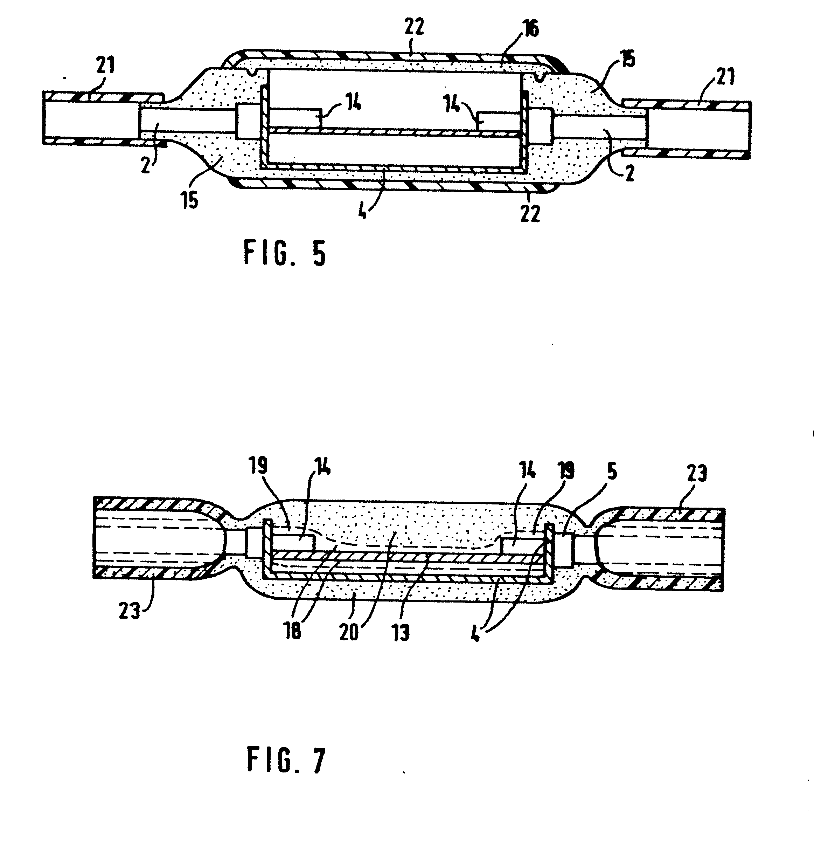

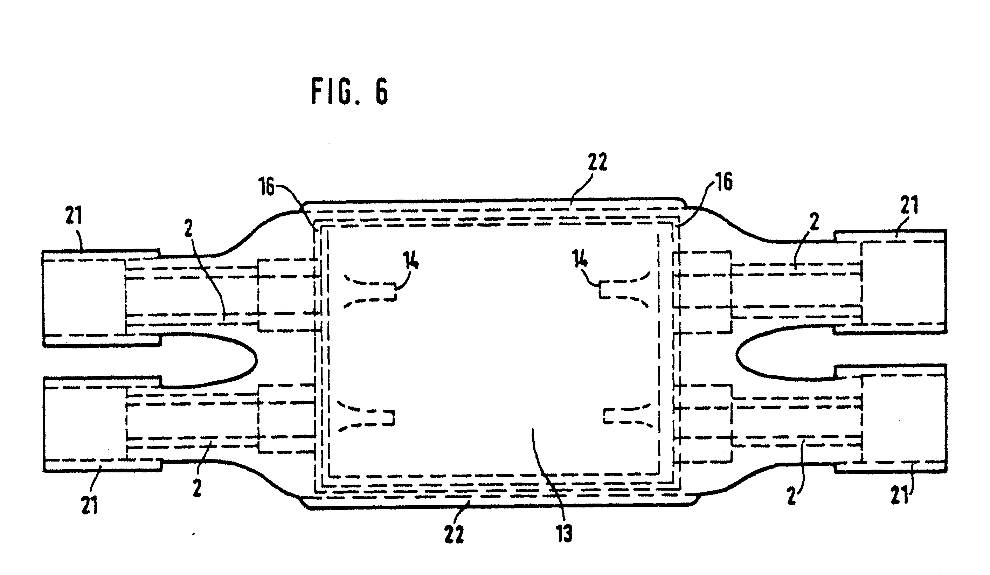

Ein weiteres Ausführungsbeispiel der Erfindung zeigt Figur 5 bzw. Figur 6. Wie beim Ausführungsbeispiel gemäß Figur 1 besteht die Kunststoffumhüllung aus einem wannenartigen Teil 15 mit Deckel 16. Der wannenartige Teil 15 wird wieder durch Umspritzen hergestellt. In die Kunststoffumhüllung 15, 16 sind Metallpartikel oder kohlenstoffhaltige Partikel zur HF-Abschirmung eingelagert. In Abweichung zum Ausführungsbeispiel gemäß Figur 1 ist jedoch nun nicht mehr die gesamte Kunststoffumhüllung von einem Schrumpfschlauch umgeben. Wie Figur 5 im Schnitt und Figur 6 in einer Draufsicht zeigt, ist auf den mittleren Teil der Kunststoffumhüllung ein Schrumpfschlauch 22 aufgeschrumpft, der innenseitig mit einem Kleber beschichtet ist und den Deckel 16 voll umgreift. Die kunststoffüberspritzten Klemmhülsen 2 sind wie beim Ausführungsbeispiel gemäß Figur 4 mit Schrumpfschlauchstücken 21 versehen.

Beim Ausführungsbeispiel gemäß Figur 7 besteht die gesamte Kunststoffumhüllung 20 aus unter Wärmeeinwirkung schrumpfbarem Material. Die Leiterplatte 13 ist wie beim Ausführungsbeispiel gemäß Figur 4 von einer Schutzschicht 18, beispielsweise Gießharz, umgeben. Um diese Schutzschicht 18, Metallwinkel 4, Klemmhülsen 2 und Aufnahmevorrichtungen 14 sowie Aussparungen 19 wird die Kunststoffumhüllung 20 durch einen Spritzvorgang aufgebracht. Die Aussparungen 19 können in diesem Fall dadurch realisiert werden, daß im Bereich zwischen Aufnahmevorrichtungen 14 und Metallwinkel 4 eine kleine, fest am Metallwinkel fixierte Kunststoffhülse eingebracht wird. Die Kunststoffumhüllung 20 selbst besteht nun aus wärmeschrumpfbarem und spritzbarem Kunststoffmaterial.
Zur HF-Abschirmung können in dieses Kunststoffmaterial
Metallpartikel oder kohlenstoffhaltige Partikel eingelagert sein. Anstelle dieser Partikeleinlagerung kann vor
dem Umspritzen mit der Schrumpfmasse um die Gießharzschicht
18 eine Metallfolie zur Abschirmung aufgebracht werden.
Die Kunststoffumhüllung 20 ist bei diesem Ausführungsbeispiel
derart ausgestaltet, daß sie nur im Bereich der Kabeleinführungen wärmeschrumpffähig ist. Dies kann dadurch erreicht
werden, daß die Enden 23 nach dem Spritzen vernetzt und aufgeweitet werden. Die Enden 23 im aufgeweiteten Zustand sind
in Figur 7 dargestellt. Der Zustand der Enden vor der Aufweitung ist gestrichelt dargestellt. Bei der Montage werden
die aufgeweiteten Enden 23 der Kunststoffumhüllung unter Zuführung von Wärme auf die Kabelenden aufgeschrumpft.

Für die Kunststoffumhüllung können spritzbare Polyolefine
verwendet werden. Für die schrumpfbaren Materialien sind
insbesondere Polyäthylen-Zusammensetzungen geeignet. Falls
eine HF-Abschirmwirkung gewünscht ist, wird in die Kunststoffumhüllung bzw. das schrumpfbare Material Leitruß,
Metallfasern oder Metallflocken eingelagert.

ANT Nachrichtentechnik GmbH          E7/Spe/hi
Gerberstr. 33                        BK 84/84
D-7150 Backnang

Patentansprüche

1.  Kabelverteiler bzw. -abzweiger für Breitbandkommunikationskoaxialkabel mit einer Leiterplatte zur Aufnahme
    elektronischer Bauelemente, Klemmhülsen zur Kontaktierung
    der Koaxialkabelaußenleiter, Aufnahmevorrichtungen zur
    Kontaktierung der Koaxialkabelinnenleiter, ersten Mitteln
    zur gegenseitigen Fixierung und Kontaktgabe zwischen den
    Klemmhülsen und der Leiterplatte, zweiten Mitteln zur
    Kontaktgabe zwischen den Aufnahmevorrichtungen und der
    Leiterplatte und Abschirmungsmittteln gegen elektromagnetische Strahlung, dadurch gekennzeichnet, daß die
    ersten Mittel aus einem zweischenkligen Metallwinkel (4)
    bestehen, an dessen Schenkeln die Klemmhülsen (2, 5)
    fixiert sind, sowie aus Befestigungsvorrichtungen (12)
    an diesem Metallwinkel für die Leiterplatte (13), und
    daß die Leiterplatte mitsamt den ersten und zweiten
    Mitteln (2, 5, 12, 14) sowie zumindest ein Teil der
    Klemmhülsen (2) von einer Kunststoffumhüllung (15, 16, 20)
    umgeben ist.

2. Kabelverteiler bzw. -abzweiger nach Anspruch 1, dadurch gekennzeichnet, daß die Kunststoffumhüllung gehäuseartig ist und aus einem wannenartigen Teil (15) mit Deckel (16) besteht.

3. Kabelverteiler bzw. -abzweiger nach Anspruch 1, dadurch gekennzeichnet, daß zwischen Leiterplatte (13) und Kunststoffumhüllung (15, 16, 20) eine nur der Abschirmung dienende Metallhülle vorgesehen ist.

4. Kabelverteiler bzw. -abzweiger nach Anspruch 1 oder 2, dadurch gekennzeichnet, daß die Kunststoffumhüllung (15, 16, 20) spritzbar ist und daß Metallpartikel darin eingelagert sind.

5. Kabelverteiler bzw. -abzweiger nach Anspruch 1 oder 2 dadurch gekennzeichnet, daß die Kunststoffumhüllung (15, 16, 20) spritzbar ist und daß Kohlenstoffpartikel oder kohlenstoffenthaltende Materialien darin eingelagert sind.

6. Kabelverteiler bzw. -abzweiger nach einem der Ansprüche 1 bis 5, dadurch gekennzeichnet, daß zumindest um einen Teil der Kunststoffumhüllung (15, 16) ein unter Wärmeeinwirkung schrumpfbarer Schrumpfschlauch (17, 22) aufbringbar ist.

7. Kabelverteiler bzw. -abzweiger nach einem der Ansprüche 1 bis 5, dadurch gekennzeichnet, daß die Kunststoffumhüllung (15, 16, 20) selbst aus unter Wärmeeinwirkung schrumpfbarem Material besteht.

8. Kabelverteiler bzw. -abzweiger nach einem der Ansprüche 1 bis 5, dadurch gekennzeichnet, daß die Kunststoffumhüllung (15, 16, 22) derart ausgebildet ist, daß sie nur im Bereich der Klemmhülsen (2) unter Wärmeeinwirkung schrumpfbar ist.

9. Kabelverteiler bzw. -abzweiger nach einem der Ansprüche 1 bis 6, <u>dadurch gekennzeichnet</u>, daß die Kunststoffumhüllung (15, 16) im Bereich der Klemmhülsen (2) mit unter Wärmeeinwirkung schrumpfbaren Schrumpfschlauchstücken (21) versehen ist.

10. Kabelverteiler bzw. -abzweiger nach einem der Ansprüche 1, 4, 5, 6, 7, 8 oder 9, <u>dadurch gekennzeichnet</u>, daß die Leiterplatte (13) mit Metallwinkel (4) und zumindest ein Teil der Klemmhülsen (2) aber ausschließlich von Aussparungen (19) für die einzuführenden Koaxialkabelinnenleiter (10) von einer Schutzschicht (18), beispielsweise Gießharz, umgeben ist zur Trennung gegen die Kunststoffumhüllung (15, 16, 20).

# FIG. 1

0187203

FIG. 2

FIG. 3

FIG. 4

AK AL/AL

0187203

FIG. 5

FIG. 7

0187203

FIG. 6